# EUROPÄISCHE PATENTSCHRIFT

(11) **EP 1 171 480 B1**
(45) Veröffentlichungstag und Bekanntmachung des Hinweises auf die Patenterteilung: **25.05.2005**
(21) Anmeldenummer: 00914149.0
(22) Anmeldetag: 17.03.2000
(51) Int. Cl.: C08F 10/00, C08F 4/625

(54) **VERFAHREN ZUR POLYMERISATION VON OLEFINEN**
METHOD FOR THE POLYMERIZATION OF OLEFINS
PROCEDE DE POLYMERISATION D'OLEFINES

(30) Priorität: 29.03.1999 US 277823; 14.05.1999 DE 19922048; 30.07.1999 DE 19935407
(43) Veröffentlichungstag der Anmeldung: 16.01.2002
(73) Patentinhaber: Basell Polyolefine GmbH, 50389 Wesseling (DE)
(72) Erfinder: MIHAN, Shahram, D-67061 Ludwigshafen (DE); LILGE, Dieter, D-67117 Limburgerhof (DE); SCHWEIER, Günther, D-67159 Friedelsheim (DE); KÖHN, Randolf, Bath BA2 2AZ (GB); SEIFERT, Guido, D-10623 Berlin (DE)
(86) Internationale Anmeldenummer: PCT/EP2000/002383
(87) Internationale Veröffentlichungsnummer: WO 2000/058369

(56) Entgegenhaltungen:
- WO-A-97/07123
- CHEMICAL ABSTRACTS, vol. 129, no. 18, 2. November 1998 (1998-11-02) Columbus, Ohio, US; abstract no. 231170, TANI, KAZUHIDE ET AL: "Preparation of.alpha.-olefin polymers by the use of vanadium or chromium complex catalysts" XP002139725 & JP 10 231317 A (MITSUBISHI CHEMICAL INDUSTRIES LTD., JAPAN) 2. September 1998 (1998-09-02)
- FARRUGIA, LOUIS J. ET AL: "Synthesis, X-ray crystal structure and spectroscopy of the hydrogen-bridged dimer [CrIII(L.cntdot.H3L)CrIII][PF6]3 (H3L = N,N',N''-Tris[(2S)-2-hydroxypropyl]-1,4,7- triazacyclononane)" POLYHEDRON (1995), 14(4), 541-5 , XP000914259

## Beschreibung

Gegenstand der vorliegenden Erfindung ist ein Verfahren zur Polymerisation von Olefinen und ein dafür geeignetes Katalysatorsystem.

Katalysatorsysteme mit einem einheitlich definierten, aktiven Zentrum, sogenannte Single-Site-Katalysatoren, gewinnen bei der Polymerisation von Olefinen immer mehr an Bedeutung. Diese Katalysatorsysteme führen zu Polymerisaten mit engen Molekulargewichtsverteilungen, was in besonders günstigen mechanischen Eigenschaften resultiert. Unter diesen Single-Site-Katalysatoren haben besonders die Metallocen-Katalysatoren bisher technische Bedeutung erlangt. Bei diesen können durch geeignete Substitution am Cyclopentadienyl-Liganden die Polymereigenschaften beeinflußt werden. Viele Metallocen-Katalysatoren sind jedoch nur durch vielstufige Synthesen zu erhalten und stellen daher einen beträchtlichen Kostenfaktor bei der Olefinpolymerisation dar.

Substituierte und unsubstituierte Triazacycloalkane mit unterschiedlichen Ringgrößen sind seit langem bekannt. Viele davon sind recht einfach und kostengünstig darzustellen. Diese Liganden koordinieren zudem gut an Metallionen und bilden dabei stabile Komplexe, von denen einige ungewöhnliche chemische und physikalische Eigenschaften besitzen. Besonders interessant ist dabei die große Stabilität dieser koordinierten Liganden - ein wichtiger Aspekte bei der Auswahl geeigneter Ligandsysteme für potentielle polymerisationsaktive Komplexe (G. J. P. Britovsek, V. C. Gibson, D. F. Wass, Angew. Chem. 1999, 111, 448-468). So ist bekannt, daß N,N',N''-Trialkyl-1,4,7-triazacyclononan Rhodium- (Wang u. Flood, Organomet. 15, (1996), 491-498) und Chromverbindungen (G. P. Stahley et al., Acta Crystall. C51, (1995), 18-20) Ethen polymerisieren, bzw. oligomerisieren. Die Polymerisationsrate ist jedoch sehr niedrig.

Durch Einführung von donorfunktionalisierten Seitenketten, welche intramolekular an das Übergangsmetall binden, in diesen Triazacycloalkan-Liganden, können die Eigenschaften der entsprechenden Metallkomplexe wesentlich verändert werden. So ist dadurch eine Veränderung des Redoxpotentials oder des Koordinationsverhaltens weiterer Liganden beobachtet worden (T. Kaden, Topics Curr. Chem. 121, (1984), 157-179). Komplexe dieser Art wurden bislang nicht zur Polymerisation von Olefinen eingesetzt.

Die Aufgabe der vorliegenden Erfindung bestand nun darin, ein Verfahren zur Polymerisation von Olefinen zu finden, welches auf einem Katalysatorsystem mit guter Polymerisationsaktivität beruht, wobei dieses Katalysatorsystem einfach herstellbar und modifizierbar ist.

Demgemäß wurde ein Verfahren zur Polymerisation von Olefinen gefunden, welches dadurch gekennzeichnet ist, daß die Polymerisation in Anwesenheit von Katalysatoren durchgeführt wird, die folgende Komponenten beinhalten:
(A) mindestens einen Komplex eines Übergangsmetalls mit einem dreizähnigen macrocyclischen Liganden, welcher mindestens einen Substituenten trägt, der eine Donorfunktion aufweist der allgemeinen Formel I 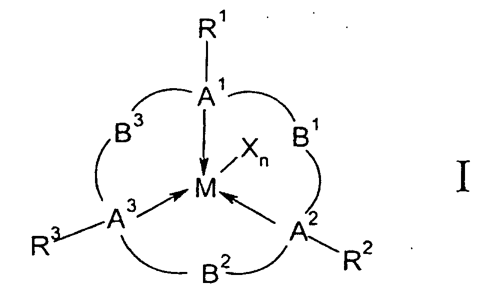 , worin die Variablen folgende Bedeutung haben:
   - M: ein Übergangsmetall der Gruppen 3 bis 12 des Periodensystems,
   - B¹-B³: ein Diradikal, ausgewählt aus der folgenden Gruppe 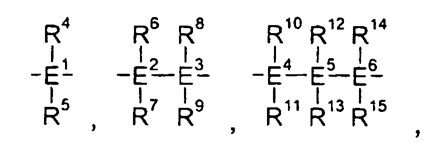 wobei
   - E¹-E⁶: Silizium oder Kohlenstoff bedeutet und maximal zwei der E⁴-E⁶ Silizium sind,
   - A¹-A³: Stickstoff,
   - R¹-R¹⁵: Wasserstoff, C₁-C₂₀-Alkyl, 5- bis 7-gliedriges Cycloalkyl, das seinerseits eine C₆-C₁₀ Arylgruppe als Substituent tragen kann, C₂-C₂₀-Alkenyl, C₆-C₂₀-Aryl, Alkylaryl mit 1 bis 10 C-Atomen im Alkylrest und 6-20 C-Atomen im Arylrest, SiR³²₃, oder ein Rest der allgemeinen Formel -Z-D, wobei die organischen Reste R¹-R¹⁵ durch Halogen(e) substituiert sein können und je zwei geminale oder vicinale Reste R¹-R¹⁵ auch zu einem fünf- oder sechsgliedrigen Ring verbunden sein können, und mindestens einer der Reste R¹-R¹⁵ ein Rest -Z-D ist, wobei D eine funktionelle Gruppe ist, die folgende Bedeutung hat:
   - D: NR¹⁶R¹⁷, NR¹⁶, OR¹⁶, O, SR¹⁶, S, PR¹⁶R¹⁷, SO₃R¹⁶, OC(O)R¹⁶,CO₂, C(O)R¹⁶, C(NR¹⁶)R¹⁷, CN oder ein fünf- oder sechsgliedriges heterocyclisches Ringsystem, wobei die Reste R¹⁶-R¹⁷ auch mit Z zu einem fünf- oder sechsgliedrigen Ring verbunden sein können;
   - Z: ein Diradikal, ausgewählt aus der folgenden Gruppe: 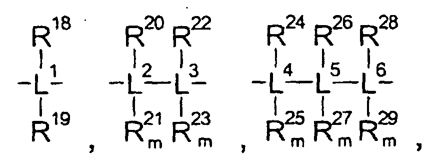 wobei
   - L¹-L⁶: Silizium oder Kohlenstoff bedeutet, maximal zwei der L⁴-L⁶ Silizium sind und m=0 ist, falls jeweils zwei der vicinalen Reste R²⁰, R²², R²⁴, R²⁶ und R²⁸ einen aromatischen Ring bilden oder zwischen zwei benachbarten L²-L⁶ eine Doppelbindung ausgebildet ist, und andernfalls m=1 ist,
   - X: unabhängig voneinander Fluor, Chlor, Brom, Jod, Wasserstoff, C₁-C₁₀-Alkyl, C₂-C₁₀-Alkenyl, C₆-C₂₀-Aryl, Alkylaryl mit 1-10 C-Atomen im Alkylrest und 6-20 C-Atomen im Arylrest, NR³⁰R³¹, OR³⁰, SR³⁰, SO₃R³⁰, OC(O)R³⁰, CN, SCN, =O, β-Diketonat, BF₄-, PF₆-, oder sperrige nichtkoordinierende Anionen,
   - R¹⁶-R³¹: Wasserstoff, C₁-C₂₀-Alkyl, 5- bis 7-gliedriges Cycloalkyl, das seinerseits eine C₆-C₁₀ Arylgruppe als Substituent tragen kann, C₂-C₂₀-Alkenyl, C₆-C₂₀-Aryl, Alkylaryl mit 1 bis 10 C-Atomen im Alkylrest und 6-20 C-Atomen im Arylrest, SiR³²₃, wobei die organischen Reste R¹⁶-R³¹ durch Halogen(e) substituiert sein können und je zwei geminale oder vicinale Reste R¹⁶-R³¹ auch zu einem fünf- oder sechsgliedrigen Ring verbunden sein können,
   - R³²: unabhängig voneinander Wasserstoff, C₁-C₂₀-Alkyl, 5- bis 7-gliedriges Cycloalkyl, das seinerseits eine C₆-C₁₀ Arylgruppe als Substituent tragen kann, C₂-C₂₀-Alkenyl, C₆-C₂₀-Aryl, Alkylaryl mit 1 bis 10 C-Atomen im Alkylrest und 6-20 C-Atomen im Arylrest und je zwei geminale Reste R³² auch zu einem fünf- oder sechsgliedrigen Ring verbunden sein können,
   - n: eine Zahl von 1 bis 4, welche der Oxidationsstufe von M, oder, falls D an das Metallzentrum M kovalent gebunden ist, der Oxidationsstufe von M minus der Anzahl an kovalent an M gebundenen Gruppen D entspricht, und außerdem pro X=Sauerstoff der Wert von n um jeweils 1 reduziert wird und
(B) optional eine oder mehrere Aktivatorverbindungen.

Weiterhin wurde ein Katalysatorsystem gefunden, welches folgende Komponenten beinhaltet:
a) mindestens einen Übergangsmetallkomplex (A) wie vorstehend genannt und
b) mindestens eine Aktivatorverbindung (B).

Die Donorfunktion kann neutral oder anionisch sein und ein Heteroatom der Gruppen 15-16 des Periodensystems (nach IUPAC Vorschlag 1985) enthalten oder ein Carbanion sein. Der Donor ist über eine Brücke mit dem macrocyclischen Liganden verbunden, so daß 1 bis 8, bevorzugt 1 bis 3 Brückenglieder, gebildet aus Kohlenstoff oder Silizium, die auch substituiert sein können, die direkte Verknüpfung bilden, wobei nicht mehr als zwei Silizium Atome jeweils benachbart zueinander sind. Der funktionelle Substituent kann neutral oder anionisch sein. Ist er neutral so kann er koordinativ an das Übergangsmetallzentrum M gebunden sein oder nicht koordinieren. Bevorzugt ist er an das Metallzentrum M koordiniert. Ist der funktionelle Substituent formal anionisch so ist er kovalent an das Metallzentrum gebunden. Die Bindungen können intra- oder intermolekular sein, bevorzugt sind sie intramolekular. Während der Polymerisation kann es auch möglich sein, daß einer oder mehrere der funktionelle Substituent koordinativ oder kovalent an die Aktivatorverbindung binden.

Die A¹-A³ verbindenden Brücken B¹-B³ können durch eine Änderung der Ringgröße Einfluß auf Aktivität und Molekulargewicht nehmen. Dabei werden B¹-B³ aus einem Kohlenstoff und/oder Silizium enthaltenden organischen Diradikal mit einer Kettenlänge von 1 bis 3 gebildet. Bevorzugt ist hierbei, wenn B¹-B³ identisch sind. Verbindungen, bei denen B¹-B³ entweder ein CR⁴R⁵ oder CR⁶R⁷-CR⁸R⁹ Diradikal sind, lassen sich sehr einfach darstellen und werden daher als Ausführungsform bevorzugt. Ganz besonders bevorzugt ist hierbei, wenn R⁴-R⁹ Wasserstoffatome sind.

Auch durch die variation der Substituenten R¹-R¹⁵ am dreizähnigen Macrocyclus lassen sich verschiedene Eigenschaften des Katalysatorsystems verändern. Durch die Zahl und Art der Substituenten kann die Zugänglichkeit des Metallatoms M für die zu polymerisierenden Olefine beeinflußt werden. So ist es möglich die Aktivität und Selektivität des Katalysators hinsichtlich verschiedener Monomerer, insbesondere sterisch anspruchsvoller Monomerer, zu modifizieren. Da die Substituenten auch auf die Geschwindigkeit von Abbruchreaktionen der wachsenden Polymerkette Einfluß nehmen können. läßt sich hierdurch auch das Molekulargewicht der entstehenden Polymere verändern. Die chemische Struktur der Substituenten R¹ bis R¹⁵ kann daher in weiten Bereichen variiert werden, um die gewünschten Ergebnisse zu erzielen und ein maßgeschneidertes Katalysatorsystem zu erhalten. Als C-organische Substituenten kommen beispielsweise folgende in Betracht: C₁-C₂₀-Alkyl, wobei das Alkyl linear oder verzweigt sein kann, wie z.B. Methyl, Ethyl, n-Propyl, iso-Propyl, n-Butyl, iso-Butyl, tert.-Butyl, n-Pentyl, n-Hexyl, n-Heptyl, n-Octyl, n-Nonyl, n-Decyl oder n-Dodecyl, 5- bis 7-gliedriges Cycloalkyl, das seinerseits eine C₆-C₁₀-Arylgruppe als Substituent tragen kann, wie z.B. Cyclopropan, Cyclobutan, Cyclopentan. Cyclohexan, Cycloheptan, Cyclooctan, Cyclononan oder Cyclododekan, C₂-C₂₀-Alkenyl, wobei das Alkenyl linear, cyclisch oder verzweigt sein kann und die Doppelbindung intern oder endständig sein kann, wie z.B. Vinyl, 1-Allyl, 2-Allyl, 3-Allyl, Butenyl, Pentenyl, Hexenyl, Cyclopentenyl, Cyclohexenyl, Cyclooktenyl oder Cyclooktadienyl, C₆-C₂₀-Aryl, wobei der Arylrest durch weitere Alkylgruppen substituiert sein kann, wie z.B. Phenyl, Naphthyl, Biphenyl, Anthranyl, o-, m-, p-Methylphenyl, 2,3-, 2,4-, 2,5-, oder 2,6-Dimethylphenyl, 2,3,4-, 2,3,5-, 2,3,6-, 2,4,5-, 2,4,6- oder 3,4,5-Trimethylphenyl, oder Arylalkyl, wobei das Arylalkyl durch weitere Alkylgruppen substituiert sein kann, wie z.B. Benzyl, o-, m-, p-Methylbenzyl, 1- oder 2-Ethylphenyl, wobei gegebenenfalls auch zwei R¹ bis R¹⁵ zu einem 5- oder 6-gliedrigen Ring verbunden sein können und die organischen Reste R¹-R¹⁵ auch durch Halogene, wie z.B. Fluor, Chlor oder Brom substituiert sein können. Als Si-organische Substituenten SiR³²₃ kommen für R³² die gleichen Reste, wie oben für R¹-R¹⁵ näher ausgeführt, in Betracht, wobei gegebenenfalls auch zwei R³² zu einem 5- oder 6-gliedrigen Ring verbunden sein können, wie z.B. Trimethylsilyl, Triethylsilyl, Butyldimethylsilyl, Tributylsilyl, Triallylsilyl, Triphenylsilyl oder Dimethylphenylsilyl.

Erfindungsgemäß muß mindestens einer dieser Reste R¹-R¹⁵ ein Rest -Z-D sein. Die Donorfunktion D ist kovalent an das Metallzentrum M gebunden, wenn D anionisch ist (z.B. ein Amid, Alkoholat oder Thiolat). Ist die Donorfunktion neutral so kann sie koordinativ das Metallzentrum M gebunden sein oder auch nicht koordinieren. Sind mehrere Donorfunktionen D vorhanden, so können ein oder mehrere von diesen intramolekular an das Metallzentrum M gebunden sein. Bevorzugt ist mindestens ein D intramolekular an das Metallzentrum M gebunden. Sind mehrere Donorfunktionen D vorhanden und sind diese kovalent intramolekular an das Übergangsmetall M gebunden, so ist Ihre maximale Anzahl durch die Oxidationsstufe des Metallzentrums minus 1 (da n mindestens 1 ist) gegeben. Bevorzugt ist die Anzahl der Reste -Z-D eins oder zwei und ganz besonders bevorzugt eins.

Insbesondere zur Herstellung von Polyethylen oder zur Herstellung von Copolymerisaten des Ethylens mit höheren α-Olefinen sind macrocyclischen Liganden mit einfachen Substitutionsmustern vorteilhaft einsetzbar. In einer bevorzugten Ausführungsform, die sich auch durch einfache Darstellbarkeit auszeichnet, können ein bis drei Reste R¹-R³ -Z-D sein. Besonders bevorzugt ist nur R¹ ein Rest -Z-D. Die übrigen Reste R²-R³ sind in diesem Fall bevorzugt Wasserstoff, Methyl, Ethyl, n-Propyl, iso-Propyl, n-Butyl, iso-Butyl, tert.-Butyl, n-Pentyl, n-Hexyl, n-Heptyl, n-Octyl, Allyl, Benzyl, Phenyl, ortho Dialkyl- oder Dichlorosubstituierte Phenyle, Trialkyl- oder Trichlorosubstituierte Phenyle, Naphthyl, Biphenyl und Anthranyl. Als Si-organische Substituenten kommen besonders Trialkylsilyl-Gruppen mit 1 bis 10 C-Atomen im Alkylrest in Betracht, insbesondere Trimethylsilyl-Gruppen.

Wie auch bei den Metallocenen können die Übergangsmetallkomplexe chiral sein. So kann einerseits der Ligand ein oder mehrere chirale Zentren besitzen, oder aber der Ligand selbst nur prochiral sein, so daß erst durch dessen Bindung an das Übergangsmetall M die Chiralität induziert wird. Dies kann z.B. einfach durch unsymmetrische Substitution der Atome A erfolgen. Drei unterschiedliche nicht chirale Substituenten R¹-R³ genügen um R und S Enantiomere der Übergangsmetallkomplexe erhalten zu können.

D kann zusammen mit dem ihn tragenden Rest Z ein Amid NR¹⁶, Amin NR¹⁶R¹⁷, Ether OR¹⁶, Alkoxid O, Thiolat S, Thioether SR¹⁶, Phoshin PR¹⁶R¹⁷, Sulfonyl SO₃R¹⁶, Carboxylat CO₂, Carbonsäureester OC(O)R¹⁶, Keton C(O)R¹⁶, Imin C(NR¹⁶)R¹⁷, Nitril CN oder ein fünf- oder sechsgliedriges heterocyclisches Ringsystem, wie z. B. Pyridin, Pyrimidin, Chinolin, Imidazol, Pyrol, Pyrazol, Indol, Furan oder Thiophen bilden. Die Bezeichnung als anionische Gruppe, wie z.B. Alkoxid oder Amid wurde so gewählt, weil in diesem Falle diese Gruppe an das Übergangsmetall bindet. Bevorzugt sind durch ihre einfache Darstellbarkeit Amid, Alkoholat, Ether, Carboxylat und Pyridin. Insbesondere werden Metallkomplexe verwendet, in denen D Sauerstoff, NR¹⁶, NR¹⁶R¹⁷ oder CN bedeutet. Durch geeignete Wahl der Reste R¹⁶ und R¹⁷ kann ebenfalls Einfluß auf die Aktivität des Katalysators und das Molekulargewicht des entstehenden Polymeren genommen werden. Als C-organische Substituenten R¹⁶ und R¹⁷ kommen die gleichen Reste, wie für R¹-R¹⁵ beschrieben (außer -Z-D), in Betracht, wobei gegebenenfalls auch zwei Reste R¹⁶ und R¹⁷ zu einem 5- oder 6-gliedrigen Ring verbunden sein können und auch durch Halogene, wie Fluor, Chlor oder Brom substituiert sein können. Bevorzugte Reste R¹⁶ und R¹⁷ sind Methyl, Ethyl, n-Propyl, n-Butyl, tert.-Butyl, n-Pentyl, n-Hexyl, n-Heptyl, n-Octyl, Vinyl, Allyl, Benzyl, Phenyl, ortho Dialkyl- und Dichlorosubstituierte Phenyle, ortho und para Trialkyl- und Trichlorosubstituierte Phenyle, Naphthyl, Biphenyl und Anthranyl. Als Si-organische Substituenten kommen besonders Trialkylsilyl-Gruppen mit 1 bis 10 C-Atomen im Alkylrest in Betracht, insbesondere Trimethylsilyl-Gruppen.

Die Verbrückung Z zwischen dem Macrocyclus und der funktionellen Gruppe D ist ein organisches Diradikal, bestehend aus Kohlenstoff und/oder Silizium Einheiten mit einer Kettenlänge von 1 bis 3. Durch eine Änderung der Kettenlänge kann die Aktivität des Katalysators beeinflußt werden. So wird z.B. die Fähigkeit des Donors D zur intramolekularen Bindung an das Übergangsmetall M durch die Länge von Z beeinflußt. Als C-organische Substituenten R¹⁸ bis R²⁹ kommen die gleichen Reste, wie für R¹-R¹⁵ beschrieben (außer Z-D) , in Betracht. Bevorzugt sind hierbei Brückenlängen von 1 bis 3 und ganz besonders Dimethylsilandiyl oder substituierte 1,2-Ethandiyle und 1,3-Propandiyle.

Die Substituenten X ergeben sich durch die Auswahl der entsprechenden Metallausgangsverbindungen, die zur Synthese der Metallkomplexe verwendet werden. Als Substituenten X kommen insbesondere die Halogene wie Fluor, Chlor, Brom oder Jod und darunter insbesondere Chlor in Betracht. Auch einfache Alkylreste, wie Methyl, Ethyl, Propyl, Butyl, Vinyl, Allyl, Phenyl oder Benzyl stellen vorteilhafte Liganden X dar. Als weitere Liganden X sollen nur exemplarisch und keineswegs abschließend Trifluoracetat, BF₄-, PF₆- sowie nichtkoordinierende Anionen (siehe z.B. S. Strauss in Chem. Rev. 1993, 93, 927-942) wie B(C₆F₅)₄- genannt werden. Die Nennung der Liganden X als Anionen beinhaltet keine Festlegung welcher Art die Bindung zum Übergangsmetall M ist. Ist X z.B. ein nicht oder schwach koordinierendes Anion, so ist die Wechselwirkung zwischen dem Metall M und dem Liganden X eher elektrostatischer Natur. Im Falle z.B. für X gleich Alkyl ist die Bindung dagegen kovalent. Die verschiedenen Arten von Bindungen sind dem Fachmann bekannt.
Auch Amide, Alkoholate, Sulfonate, Carboxylate und β-Diketonate sind besonders geeignet. Durch Variation der Reste R³⁰ und R³¹ können z.B. physikalische Eigenschaften wie Löslichkeit fein eingestellt werden. R³⁰ und R³¹ sind die gleichen Reste, wie für R¹-R¹⁵ beschrieben (außer Z-D). Bevorzugt werden C₁-C₁₀-Alkyl wie Methyl, Ethyl, n-Propyl, n-Butyl, tert.-Butyl, n-Pentyl, n-Hexyl, n-Heptyl, n-Octyl, sowie Vinyl, Allyl, Benzyl und Phenyl als Rest R³⁰ und R³¹ verwendet. Manche dieser substituierten Liganden X werden ganz besonders bevorzugt verwendet, da sie aus billigen und einfach zugänglichen Ausgangsstoffen erhältlich sind. So ist eine besonders bevorzugte Ausführungsform, wenn X für Dimethylamid, Methanolat, Ethanolat, Isopropanolat, Phenolat, Naphtholat, Triflat, p-Toluolsulfonat, Acetat, Acetylacetonat oder 1,1,1,5,5,5-Hexafluoroacetylacetonat steht.

Die Anzahl n der Liganden X hängt von der Oxidationsstufe des Übergangsmetalles M ab. Die Zahl n kann somit nicht allgemein angegeben werden, sondern kann für jedes bestimmte Übergangsmetall unterschiedliche Werte annehmen. Die Oxidationsstufe der einzelnen Übergangsmetalle in katalytisch aktiven Komplexen, sind dem Fachmann zumeist bekannt. So weisen die entsprechenden Komplexe des Titans, des Zirkoniums und des Hafniums insbesondere die Oxidationsstufe +3 und +4 auf, Chrom, Molybdän und Wolfram liegen bevorzugt in der Oxidationsstufe +3 vor, wogegen Eisen und Nickel vorzugsweise in der Oxidationsstufe +2 eingesetzt werden. Es können jedoch auch Komplexe eingesetzt werden, deren Oxidationsstufe nicht der des aktiven Katalysators entspricht. Solche Komplexe können dann durch geeignete Aktivatoren entsprechend reduziert oder oxidiert werden.

Als Übergangsmetalle M kommen besonders die Elemente der Gruppen 3 bis 8 des Periodensystems und insbesondere die Elemente der Gruppe 6 des Periodensystems in Betracht. Besonders geeignet als Zentralatome der erfindungsgemäß eingesetzten Übergangsmetallkomplexe sind die Elemente Scandium, Yttrium, Titan, Zirkonium, Hafnium, Vanadium, Chrom, Molybdän, Wolfram, Mangan, Eisen, Cobalt, Rhodium, Nickel und Palladium. Ganz besonders bevorzugt werden Übergangsmetallkomplexe des Chroms verwendet.

Die Herstellung verschiedener funktioneller Triazacycloalkan-Liganden ist seit langer Zeit bekannt. Verschiedene Synthesewege für diese Komplexliganden werden z.B. in F. Weitl, K. Raymond JACS 101 (1979), 2728; M. Takahashi, S. Takamoto, Bull. Chem. Soc. Japan 50,(1977), 3413; T. Arishima, K. Hamada, S. Takamoto, Nippon Kagaku Kaishi, (1973), 1119; L. Christiansen, D. N. Hendrickson, H. Toftlund, S. R. Wilson, C. L. Xie, Inorg. Chem. 25, (1986), 2813; L. R. Gahan, G. A. Lawrence, A. M. Sargeson, Aust. J. Chem. 35, (1982), 1119; B. A. Sayer, J. P. Michael, R. D. Hancock, Inorg. Chim. Acta, 77, (1983), L63; K Wieghardt, U. Bossek, M. Guttmann, J. Weiss, Z. Naturforsch., 38b (1983), 81 und I.A. Fallis et al., Chem. Commun. 1998, 665-667.

Die Metallkomplexe, insbesondere die Chromkomplexe, lassen sich auf einfache Weise erhalten, wenn man die entsprechenden Metallsalze wie z.B. Metallchloride oder Metallcarbonyle mit dem Liganden umsetzt (z. B. in P. Chaudhuri, K. Wieghardt, Prog. Inorg. Chem. 35, (1987), 329 oder G. P. Stahley et al., Acta Crystall. C51, (1995), 18-20).

Das erfindungsgemäße Verfahren zur Polymerisation von Olefinen läßt sich mit allen technisch bekannten Polymerisationsverfahren bei Temperaturen im Bereich von 20 bis 300°C und unter Drücken von 1 bis 4000 bar kombinieren. Die vorteilhaften Druck- und Temperaturbereiche zur Durchführung des Verfahrens hängen demgemäß stark von der Polymerisationsmethode ab. So lassen sich die erfindungsgemäß verwendeten Katalysatorsysteme in allen bekannten Polymerisationsverfahren, also beispielsweise in Hochdruck-Polymerisationsverfahren in Rohrreaktoren oder Autoklaven, in Suspensions-Polymerisationsverfahren, in Lösungs-polymerisationsverfahren oder bei der Gasphasenpolymerisation einsetzen. Bei den Hochdruck-Polymerisationsverfahren, die üblicherweise bei Drücken zwischen 1000 und 4000 bar, insbesondere zwischen 2000 und 3500 bar, durchgeführt werden, werden in der Regel auch hohe Polymerisationstemperaturen eingestellt. Vorteilhafte Temperaturbereiche für diese Hochdruck-Polymerisationsverfahren liegen zwischen 200 und 280°C, insbesondere zwischen 220 und 270°C. Bei Niederdruck-Polymerisationsverfahren wird in der Regel eine Temperatur eingestellt, die mindestens einige Grad unter der Erweichungstemperatur des Polymerisates liegt. Insbesondere werden in diesen Polymerisationsverfahren Temperaturen zwischen 50 und 180°C, vorzugsweise zwischen 70 und 120°C, eingestellt. Von den genannten Polymerisationsverfahren ist erfindungsgemäß die Gasphasenpolymerisation, insbesondere in Gasphasenwirbelschicht-Reaktoren, sowie die Suspensionspolymerisation, insbesondere in Schleifen- und Rührkesselreaktoren, besonders bevorzugt. Die Gasphasenpolymerisation kann auch in der sogenannten condensed, supercondensed oder superkritischen Fahrweise durchgeführt werden. Die verschiedenen oder gleichen Polymerisationsverfahren können auch wahlweise miteinander in Serie geschaltet sein und so eine Polymerisationskaskade bilden. Weiterhin kann zur Regelung der Polymereigenschaften auch ein Zusatz, wie z.B. Wasserstoff in den Polymerisationsverfahren verwendet werden.

Nach dem erfindungsgemäßen Verfahren lassen sich verschiedene olefinisch ungesättigte Verbindungen polymerisieren, wobei dies auch die Copolymerisation umfaßt. Im Gegensatz zu einigen bekannten Eisen- und Cobaltkomplexen zeigen die erfindungsgemäß eingesetzten Übergangsmetallkomplexe eine gute Polymerisationsaktivität auch mit höheren α-Olefinen, so daß ihre Eignung zur Copolymerisation besonders hervorzuheben ist. Als Olefine kommen dabei neben Ethylen und α-Olefinen mit 3 bis 10 Kohlenstoffatomen, wie Propen, 1-Buten, 1-Penten, 1-Hexen, 1-Hepten, 1-Okten oder 1-Deken, auch interne Olefine, wie z.B. 2-Penten, 2-Hexen, 3-Hexen oder Norbornen und nichtkonjugierte und konjugierte Diene wie Butadien, 1,5-Hexadien oder 1,6-Heptadien und polare Monomere wie Acrylsäureester, Acrolein, Acrylnitril, Vinylether, Allylether und Vinylacetat in Betracht. Auch vinylaromatische Verbindungen wie Styrol lassen sich nach dem erfindungsgemäßen Verfahren polymerisieren. Bevorzugt wird mindestens ein Olefin ausgewählt aus der Gruppe Ethen, Propen, 1-Buten, 1-Penten, 1-Hexen, 1-Hepten und 1-Octen polymerisiert. Eine bevorzugte Ausführungsform des erfindungsgemäßen Verfahrens ist dadurch gekennzeichnet, daß man als Monomere Gemische von Ethylen mit C₃- bis C₈-α-Olefinen einsetzt.

Die als Komponente (A) bezeichneten Metallkomplexe sind für sich teilweise nicht oder wenig polymerisationsaktiv und werden dann mit einem Aktivator, der Komponente (B), in Kontakt gebracht um gute Polymerisationsaktivität entfalten zu können. Als Aktivatorverbindungen kommen beispielsweise solche vom Alumoxantyp in Betracht, insbesondere Methylalumoxan. Alumoxane werden z.B. durch kontrollierte Addition von Wasser zu Alkylaluminiumverbindungen, insbesondere Trimethylaluminium, hergestellt. Als Co-Katalysator geeignete Alumoxan-Zubereitungen sind kommerziell erhältlich. Es wird angenommen, daß es sich hierbei aus einer Mischung von cyclischen und linearen Verbindungen handelt. Die cyclischen Alumoxane können durch die Formel (R³³AlO)ₖ und die linearen Aluminoxane durch die Formel R³³(R³³AlO)_{k'}AlR₂³³ zusammengefaßt werden, wobei k bzw. (k'-1) den Oligomerisationsgrad angibt und eine Zahl von ungefähr 2 bis 50 ist. Vorteilhafte Alumoxane enthalten im wesentlichen Alumoxan-Oligomere mit einem Oligomerisationsgrad von etwa 2 bis 30 und R³³ ist bevorzugt ein C₁-C₆-Alkyl und besonders bevorzugt Methyl, Ethyl, Butyl oder Isobutyl.

Neben den Alumoxanen können als Aktivatorkomponenten auch solche eingesetzt werden, wie sie in der sogenannten kationischen Aktivierung der Metallocen-Komplexe Verwendung finden. Derartige Aktivatorkomponenten sind z.B. aus EP-B1-0468537 und aus EP-B1-0427697 bekannt. Insbesondere können als solche Aktivatorverbindungen (B) Borane oder Borate, wie z. B. Trialkylboran, Triarylboran, Dimethylaniliniumtetraarylborat, Trityltetraarylborat, Dimethylaniliniumboratabenzole oder Tritylboratabenzole (siehe WO-A-97/36937) eingesetzt werden. Besonders bevorzugt werden Borane oder Borate eingesetzt, welche mindestens zwei perfluorierte Arylreste tragen. Als besonders geeignete Aktivatorverbindung (B) werden Verbindung aus der Gruppe Aluminoxan, Dimethylaniliniumtetrakispentafluorophenylborat, Trityltetrakispentafluorophenylborat oder Trispentafluorophenylboran verwendet.

Weiterhin können als Aktivatorkomponente Verbindungen wie Aluminiumalkyle, insbesondere Trimethylaluminium, Triethylaluminium, Triisobutylaluminium, Tributylaluminium, Dimethylaluminiumchlorid, Dimethylaluminiumfluorid, Methylaluminiumdichlorid, Methyaluminiumsesquichlorid, Diethylaluminiumchlorid oder Aluminiumtrifluorid eingesetzt werden.

Manchmal ist es wünschenswert eine Kombination von verschiedenen Aktivatoren zu verwenden. Dies ist z.B. bei den Metallocenen bekannt, bei denen Borane und Borate oft in Kombination mit einem Aluminiumalkyl eingesetzt werden. Generell ist auch eine Kombination von verschiedenen Aktivatorkomponenten mit dem erfindungsgemäßen Übergangsmetallkomplex möglich.

Die Menge der zu verwendenden Aktivatorverbindungen hängt von der Art des Aktivators ab. Generell kann das Molverhältnis Metallkomplex (A) zu Aktivatorverbindung (B) von 1:0.1 bis 1:10000 betragen, bevorzugt werden 1:1 bis 1:1000. Das Molverhältnis von Metallkomplex (A) zu Dimethylaniliniumtetrakispentafluorophenylborat, Trityltetrakispentafluorophenylborat oder Trispentafluorophenylboran liegt bevorzugt zwischen 1:1 und 1:20 und besonders bevorzugt zwischen 1:1 und 1:10, zu Methylaluminoxan bevorzugt wischen 1:1 und 1:3000 und besonders bevorzugt zwischen 1:10 und 1:500. Es ist auch möglich, daß der Aktivator mit dem funktionellen Substituenten oder D unter Bildung einer Bindung reagiert.

Der Übergangsmetallkomplex kann dabei entweder vor oder nach Kontaktierung mit den zu polymerisierenden Olefinen mit der oder den Aktivatorverbindungen in Kontakt gebracht werden. Auch eine Voraktivierung mit ein oder mehreren Aktivatorverbindungen vor der Durchmischung mit dem Olefin und weitere Zugabe der gleichen oder anderer Aktivatorverbindungen nach Kontaktierung dieses Gemisches mit dem Olefin ist möglich. Eine Voraktivierung erfolgt in der Regel bei Temperaturen zwischen 10-100°C, bevorzugt zwischen 20-80°C.

Auch kann mehr als einer der erfindungsgemäßen Übergangsmetallkomplexe (A) gleichzeitig mit dem zu polymerisierenden Olefin in Kontakt gebracht werden. Dies hat den Vorteil, daß so ein weiterer Bereich an Polymeren erzeugt werden kann. Auf diese Weise können z.B. bimodale Produkte hergestellt werden.

Ein ebenfalls breites Produktspektrum kann durch Verwendung der erfindungsgemäßen Komplexe in Gegenwart eines für die Polymerisation von Olefinen üblichen Katalysator (C) erreicht werden. Als Katalysatoren (C) kommen hierbei besonders klassische Ziegler Natta Katalysatoren auf der Basis von Titan, klassische Phillips Katalysatorenauf der Basis von Chromoxiden, Metallocene, die sogenannten constrained geometry Komplexe (siehe z.B. EP-A-416815 oder EP-A-420436), Nickel und Palladium Bisimin-Systeme (zu deren Darstellung siehe WO-A-98/03559), Eisen und Cobalt Pyridinbisimin-Verbindungen (zu deren Darstellung siehe WO-A-98/27124) oder Chrompyrrol-Verbindungen (siehe z.B. EP-A-608447) verwendet werden. So können auch durch derartige Kombinationen z.B. bimodale Produkte hergestellt oder in situ Comonomer erzeugt werden.

Die erfindungsgemäßen Katalysatoren (A) können optional auch auf einem organischen oder anorganischen Träger immobilisiert und in geträgerter Form in der Polymerisation verwendet werden. Dies ist eine gängige Methode, um Reaktorablagerungen zu vermeiden und die Polymermorphologie zu steuern. Als Trägermaterialien werden bevorzugt Kieselgel, Magnesiumchlorid, Aluminiumoxid, mesoporöse Materialien, Aluminosilikate und organische Polymere wie Polyethylen, Polypropylen oder Polystyrol und insbesondere Kieselgel oder Magnesiumchlorid verwendet.

Die Aktivatorverbindungen (B) und der Polymerisationskatalysator (A) können mit dem Träger in verschiedenen Reihenfolgen oder gleichzeitig in Kontakt gebracht werden. Dies wird in der Regel in einem inerten Lösungsmittel durchgeführt, das nach der Immobilisierung abfiltriert oder verdampft werden kann. Auch die Verwendung des noch feuchten geträgerten Katalysators ist möglich. So kann zuerst die Mischung des Trägers mit dem oder den Aktivatorverbindungen oder auch zuerst das Kontaktieren des Trägers mit dem Polymerisationskatalysator erfolgen. Auch eine Voraktivierung des Katalysators mit ein oder mehreren Aktivatorverbindungen vor der Durchmischung mit dem Träger ist möglich. Die Menge an Metallkomplex (A) (in mmol) pro Gramm Trägermaterial kann stark variieren z.B. zwischen 0.001 bis 1 mmol/g. Die bevorzugt Menge an Metallkomplex (A) pro Gramm Trägermaterial liegt zwischen 0.001 und 0.5 mmol/g, und besonders bevorzugt zwischen 0.005 und 0.1 mmol/g. In einer möglichen Ausführungsform kann der Metallkomplex (A) auch in Anwesenheit des Trägermaterials hergestellt werden. Eine weitere Art der Immobilisierung ist auch die Vorpolymerisation des Katalysatorsystems mit oder ohne vorherige Trägerung.

Durch das erfindungsgemäßen Verfahren lassen sich Polymerisate von Olefinen darstellen. Der Begriff Polymerisation, wie er zur Beschreibung der Erfindung hier verwendet wird, umfaßt sowohl Polymerisation als auch Oligomerisation, d.h. Oligomere und Polymere mit Molekulargewichten im Bereich von etwa 56 bis 3000000 können durch diese Verfahren erzeugt werden.

Auf Grund ihrer guten mechanischen Eigenschaften eignen sich die mit dem erfindungsgemäßen Katalysatorsystem hergestellten Polymerisate vor allem für die Herstellung von Folien, Fasern und Formkörpern.

Die erfindungsgemäßen Katalysatoren besitzen gute Aktivitäten. Vergleicht man die Polymerisationsergebnisse von N,N',N''-Trimethyl-1,4,7-triazacyclononanchromtrichlorid mit denen einer analogen Verbindung, die den zusätzlichen donorfunktionalisierten Substituenten trägt, so ergibt sich folgendes überraschendes Ergebnis: während der erst genannte Katalysator nur Dimere liefert, erhält man bei Verwendung des letzteren Polymere mit Molekulargewichten um die 200000.

Die folgenden Beispiele erläutern die Erfindung.

Alle Arbeiten wurden, falls nicht anders vermerkt, unter Luftund Feuchtigkeitsausschluß durchgeführt. Toluol und Tetrahydrofuran THF wurden über eine Molekularsiebsäule oder Natrium/Benzophenon getrocknet und abdestilliert. Triisobutylaluminium TiBAl (2 M in Heptan) wurden von der Firma Witco, MAO (Methylaluminoxan 10% in Toluol) und N,N-Dimethylaniliniumtetrakis(pentafluorophenyl)borat DMAB von der Firma Albemarle, MAO (Methylaluminoxan 30% in Toluol) von der Firma Witco GmbH, n-Butyllithium (2.5M in Hexan) von der Firma Aldrich und n-Butyllithium (2.5M in Hexan) von der Firma Acros erhalten.

Die Darstellung von N-(1,4,7-triazacyclononanyl)-2-octan-2-ol erfolgte gemäß I.A. Fallis et al., Chem. Commun. 1998, 665-667.

### Beispiel 1:

### Herstellung von 1-(2-Oxidooctyl)-(1,4,7-triazacyclononanyl)chrom-III-dichlorid

Zu einer Lösung von 804 mg (3.12 mmol) 1-(2-Hydroxyoctyl)-1,4,7-triazacyclononan in THF wurden bei -30°C langsam 2 ml (3 mmol) einer Lösung von 1.5M Butyllithium in Hexan innerhalb von 30 min zugetropft. Nach beendeter Zugabe wurde auf Raumtemperatur erwärmt und dann 1105 mg (2.95 mmol) CrCl₃(THF)₃ zugegeben. Die Reaktionsmischung wurde über eine kurze Kieselgelsäule filtriert und anschließend von allen flüchtigen Bestandteilen im Ölpumpenvakuum befreit. Es wurde ein pulverförmiges Produkt in einer Ausbeute von 75% (907 mg; 2.21 mmol) erhalten.

### Beispiel 2:

### 2.1. Herstellung von 1,3-Didodecyl-5-(3-dimethylaminopropyl)-1,3,5-triazacyclohexan

10.7 g Dodecylamin (58 mmol) und 0.8 ml 3-Dimethylamino-propylamin (6.4 mmol) wurden in Ethanol gelöst, dann 1.93 g Paraformaldehyd (64 mmol) zugegeben und gerührt. Die auftretende Trübung wurde durch Zugabe von Ether immer wieder aufgelöst. Nach ca. 1 Tag hatte sich der gesamte Paraformaldehyd aufgelöst. Das Lösungsmittel wurde anschließend am Rotationsverdampfer entfernt, der Rückstand in etwas Toluol gelöst und dann wieder im Vakuum von Lösungsmittel befreit. Es verblieben 12.27 g eines viskosen farblosen Produkts, das nach NMR-Spektroskopie aus ca. 75 mol-% 1,3,5-Tridodecyl-1,3,5-triazacyclohexan und 25 mol-% 1,3-Didodecyl-5-(3-dimethylaminopropyl)-1,3,5-triazacyclohexan und Toluol bestand.

### Ligandengemisch:

13C-NMR (50 MHz, CDCl₃): δ 74.5 (Ring-CH₂), 57.6, 50.5 (NCH₂ (Amin)), 52.6 (NCH₂ (Dodecyl)), 45.3 (NMe₂), 31.7, 29.3-29.6, 27.4, 27.3, 22.6 (CH₂), 19.9 (Me (Methyl))

### 2.2. Herstellung von 1,3-Didodecyl-5-(3-dimethylaminopropyl)-1,3,5-triazacyclohexanchromtrichlorid

11.85 g von diesem Gemisch (96.6 %) wurden in 300 ml Toluol gelöst und anschließend 3.24 g CrCl₃ (20.5 mmol) zugegeben. Nach Abdestillieren von 50 ml Toluol wurden 0.3 g Zn-Pulver zugegeben. Dann wurde das Lösungsmittel destillativ entfernt und der Rückstand mit Ether gewaschen. Die weitere Reinigung erfolgte säulenchromatographisch über Kieselgel. Zuerst wurde mit Chloroform eluiert und 11 g 1,3,5-Tridodecyl-1,3,5-triazacyclohexanchromtrichlorid (14.7 mmol, 95 % der Theorie) erhalten, dann auf Aceton gewechselt und 1.2 g 1,3-Didodecyl-5-(3-dimethylaminopropyl)-1,3,5-triazacyclohexanchromtrichlorid (1.8 mmol, 30 %) erhalten.

### Beispiel 3:

### 3.1. Herstellung von 1,3-Diethyl-5-(2-cyanoethyl)-1,3,5-triazacyclohexan

### Methode I:

1 ml 3-Aminopropionitril (14 mmol) wurden in 80 ml 1,3,5-Triethyl-1,3,5-triazacyclohexan (0.4 mol) gelöst und 12 h auf 130°C erhitzt. Nach Abdestillieren des überschüssigen 1,3,5-Triethyl-1,3,5-triazacyclohexan bei 70 °C/ 1.3 Pa wurden 2.2 g Rohprodukt erhalten. Dieses wurde in 50 ml Ether gelöst und durch eine kurze Silicagel-Säule filtriert. Nach Entfernen des Lösungsmittels im Vakuum verblieben 1.9 g (69 %) eines farblosen Öls.

### Methode II:

9 ml 3-Aminopropionitril (130 mmol) und 100 ml Ethylamin (70%-ig in Wasser, 1.2 mol) wurden in 200 ml Ethanol gelöst und 40 g Paraformaldehyd (1.33 mol) zugegeben und gerührt. Nach Auflösen des Paraformaldehyd und Abkühlen auf Raumtemperatur wurde das Lösungsmittel entfernt, der Rückstand in 50 ml Ether gelöst und durch eine kurze Silicagel-Säule filtriert. Nach Entfernen des Lösungsmittels im Vakuum verblieben 20 g (78 %) eines farblosen Öls.
MS (70 eV, 23 °C): 196 (M⁺, 8 %), 195 ((M-H)⁺, 11 %), 139 ((M-(H₂C=NEt (Et: Ethyl)))⁺, 27 %)
1H-NMR (200 MHz, CDCl₃): δ 3.3, 3.2br (6H, Ring-CH₂), 2.9t (2H, CH₂CH₂CN), 2.4t (2H, CH₂CH₂CN), 2.2q (4H, CH₂Me), 0.9t (6H, CH₂Me)
13C-NMR (50 MHz, CDCl₃): δ 118.7 (CN), 74.5, 73.1 (Ring-CH₂), 48.3 (CH₂CH₂CN), 46.1 (CH₂Me), 17.5 (CH₂CH₂CN), 12.1 (CH₂Me)
IR (KBr, ν/cm⁻¹): 649m, 805m, 1008s, 1045s, 1104m, 1122m, 1146w, 1189m, 1215m, 1292s, 1356m, 1379m, 1454s, 1470s, 2247m, 2642m, 2790s, 2806s, 2874s, 2936s, 2969s

### 3.2. Herstellung von 1,3-Diethyl-5-(2-cyanoethyl)-1,3,5-triazacyclohexanchromtrichlorid

2.2 g (11.2 mmol) 1,3-Diethyl-5-(2-cyanoethyl)-1,3,5-triazacyclohexan und 4.0 g CrCl₃(THF)₃ (11 mmol) wurden in 40 ml THF gerührt. Nach 1 h wurde das Lösungsmittel im Vakuum entfernt, zweimal erneut THF zugegeben und im Vakuum entfernt, dann mit Ether gewaschen und im Vakuum getrocknet. Es wurden 1.9 g violettes 1,3-Diethyl-5-(2-cyanoethyl)-1,3,5-triazacyclohexanchromtrichlorid (88 %) erhalten, Schmelzpunkt 246-248°C.
Elementaranalyse (ber.): C 34.0 (33.9), H 6.0 (5.7), N 15.0 (15.8), Cl 26.4 (30.0)
IR (KBr, ν/cm⁻¹): 423m, 431m, 504m, 508m, 516m, 531w, 547m, 602m, 763m, 793m, 924w, 964m, 983s, 1006s, 1020s, 1086m, 1097m, 1121w, 1141s, 1170s, 1202m, 1245s, 1270s, 1292s, 1303s, 1323s, 1331s, 1348s, 1377s, 1391s, 1414m, 1462m, 1486s, 1639s, 2254m, 2887s, 2953s, 2983s, 3390s

### Beispiel 4:

### 4.1. Herstellung von 1,3-Didodecyl-5-(2-hydroxyethyl)-1,3,5-triazacyclohexan

48 g Dodecylamin (259 mmol) und 1.7 ml Ethanolamin (29 mmol) wurden in 100 ml Ethanol gelöst und 8.6 g Paraformaldehyd (287 mmol) zugegeben und gerührt. Die durch 1,3,5-Tridodecyl-1,3,5-triazacyclohexan auftretende Trübung wurde durch Zugabe von Ether immer wieder aufgelöst. Nach ca. 1 Tag hatte sich der gesamte Paraformaldehyd aufgelöst. Das Lösungsmittel wurde dann am Rotationsverdampfer entfernt, der Rückstand mit etwas Toluol gelöst und dann wieder im Vakuum von Lösungsmittel befreit. Es verblieben 55 g eines viskosen farblosen Produkts, das nach NMR-Spektroskopie aus ca. 75 mol-% 1,3,5-Tridodecyl-1,3,5-triazacyclohexan und 25 mol-% 1,3-Didodecyl-5-(2-hydroxyethyl)-1,3,5-triazacyclohexan und etwas Toluol besteht.

### 4.2. Herstellung von 1,3-Didodecyl-5-(2-oxidoethyl)-1,3,5-triazacyclohexanchromdichlorid

2.6 g von diesem Gemisch wurden wie unter 2.2. beschrieben mit 0.7 g CrCl₃ (4.4 mmol) in Toluol und 0,3 g Zn-Pulver umgesetzt. Nach 2h wurden 50 ml THF zugegeben, erneut zum Sieden erhitzt und dann 2 Tage gerührt. Nach Entfernen des Lösungsmittels und Waschen mit Ether wurde der grün-violette Rückstand säulenchromatographisch über Kieselgel gereinigt. Zuerst wurde mit Dichlormethan eluiert und 590 mg 1,3,5-Tridodecyl-1,3,5-triazacyclohexanchromtrichlorid (0.8 mmol) erhalten, dann auf Aceton gewechselt und 1,8 g grünes Produkt 1,3-Didodecyl-52-oxidoethyl)-1,3,5-triazacyclohexanchromdichlorid (3.1 mmol, 70%) erhalten. Zur Reinigung wurde das grüne Produkt in Hexan gelöst und durch Kühlen auf -20 °C wieder gefällt.

### Beispiel 5:

### 5.1. Herstellung von 1,3-Didodecyl-5-(2-dimethylaminoethyl)-1,3,5-triazacyclohexan (5.1.a)und 1-Dodecyl-3,5-bis(2-dimethylaminoethyl)-1,3,5-triazacyclohexan (5.2.b)

20.16 g Dodecylamin (109 mmol) und 5.9 ml Dimethylaminoethylamin (54 mmol) wurden in Ethanol gelöst und 4.90 g Paraformaldehyd (163 mmol) zugegeben und gerührt. Nach ca. einem Tag hatte sich der gesamte Paraformaldehyd aufgelöst. Das Lösungsmittel wurde dann am Rotationsverdampfer entfernt, der Rückstand mit etwas Toluol gelöst und dann wieder im Vakuum von Lösungsmittel befreit.

### 5.2. Herstellung von 1,3-Didodecyl-5-(2-dimethylaminoethyl)-1,3,5-triazacyclohexanchromtrichlorid (5.2.a) und 1-Dodecyl-3,5-bis(2-dimethylaminoethyl)-1,3,5-triazacyclohexanchromtrichlorid (5.2.b)

Dieses Gemisch wurde wie unter 2.2. beschrieben mit 8.2 g CrCl₃ (52 mmol) und 0.45 g Zn-Pulver umgesetzt. Nach Entfernen des Lösungsmittels und Waschen mit Ether wurde der Rückstand mehrmals mit Aceton (Lösung A) und dann mit Chloroform (Lösung B) extrahiert.

Die Lösung A wurde nach Entfernen des Lösungsmittels im Vakuum über Kieselgel chromatographiert. Zuerst wurde mit Chloroform eluiert und 3.9 g (A1) erhalten, dann mit Aceton 3.62 g (A2) und mit Aceton/Triethylamin weitere 2.40 g (A3) erhalten.(A1) wurde zusammen mit Lösung B über Kieselgel chromatographiert. Zuerst wurde mit Chloroform eluiert und 12.12 g 1,3,5-Tridodecyl-1,3,5-triazacyclohexanchromtrichlorid (16 mmol), dann mit Aceton 3.96 g (B2) erhalten. (A2) wurde erneut chromatographisch mit Aceton gereinigt und 2.11 g (C2) erhalten. (A3) wurde nach Entfernen des Lösungsmittels mit Aceton chromatographisch in 400 mg (D2) und dann 1.28 g (D3) getrennt. Die Fraktionen (B2), (C2) und (D2) wurden vereint und erneut durch Chromatographie mit Aceton gereinigt, in etwas Toluol gelöst, im Vakuum von Lösungsmittel befreit, mit Pentan gewaschen und erneut im Vakuum getrocknet. Es wurden 4.84 g 1,3-Didodecyl-5-(2-dimethylaminoethyl)-1,3,5-triazacyclohexanchromtrichlorid (5.2.a) (7.4 mmol) erhalten. Die Fraktion (D3) wurde durch erneute Chromatographie mit Aceton gereinigt und 1.06 g 1-Dodecyl-3,5-bis(2-dimethylaminoethyl)-1,3,5-triazacyclohexanchromtrichlorid (5.2.b)(1.9 mmol) erhalten.

### Beispiel 6:

### Herstellung von 1,3,5-Tris(3-(3-ethylhexyloxy)propyl)-1,3,5-triazacyclohexan

Herstellung erfolgte analog zu C. W. Hoerr et. al. J. Am. Chem. Soc. 78, (1956), 4667-4670 unter Verwendung von 3-(3-Ethylhexyloxy)propylamin an Stelle von Dodecylamin.
1H-NMR (200 MHz, CDCl₃): δ 3.3t (6H, OCH₂), 3.1d (6H, OCH₂), 3.2br (6H, Ring-CH₂), 2.3t (6H, NCH₂), 1.0-1.6 (33H, CH, CH₂), 0.7t (12H, Me)
13C-NMR (50 MHz, Toluol): δ 73.7 (Ring-CH₂), 72.4, 67.9 (OCH₂), 48.4 (NCH₂), 39.0 (CH), 30.0, 28.4, 27.4, 23.2, 22.3 (CH₂), 13.2, 10.3 (Me)

### Beispiel 7:

### Herstellung von 1,3,5-Tris(3-(2-methoxyethoxy)propyl)-1,3,5-triazacyclohexan

Herstellung erfolgte analog zu C. W. Hoerr et. al. J. Am. Chem. Soc. 78, (1956), 4667-4670 unter Verwendung von 3-(Propylamin-2-Methoxyethylether an Stelle von Dodecylamin.
1H-NMR (200 MHz, CDCl₃): δ 3.35-3.50 (18H, OCH₂), 3.30 (9H, OCH₃), 3.2br (6H, Ring-CH₂), 2.4t (6H, NCH₂), 1.6t (6H, C-CH₂-C)
13C-NMR (50 MHz, CDCl₃): δ 74.3 (Ring-CH₂), 71.6, 69.8, 69.3 (OCH₂), 58.7 (OCH₃), 49.2 (NCH₂), 27.4 (C-CH₂-C)

### Beispiel 8:

### 8.1 Herstellung von 1,3-Dimethyl-5-(2-Hydroxyethyl)-1,3,5-triazacyclohexan

1 ml Ethanolamin (17 mmol) wurden in 80 ml 1,3,5-Trimethyl-1,3,5-triazacyclohexan gelöst und 12 h lang auf 130°C erwärmt (Gasentwicklung). Nach Abdestillieren des überschüssigen 1,3,5-Trimethyl-1,3,5-triazacyclohexan (60°C/ 0.01 Torr) wurden 2 g Rohprodukt erhalten. Es wurden 10 ml Methylamin (40 % in Wasser) zugegeben, 12 h lang gerührt und dann wieder im Vakuum entfernt. Der Rückstand wurde durch kurzes Erhitzen mit einem Bunsenbrenner im Vakuum umkondensiert.
Ausbeute: 1.2 g (46 %) eines farblosen Öls.
1H NMR (CDCl₃, 200 MHz): 5.35br (1H, HO), 3.50t (2H, HOCH₂), 3.14br (6H, NCH₂N), 2.79t (2H, NCH₂), 1.97s (6H, NMe₂)
Analog zu Beispiel 8.1. wurden aus 1 ml Ethanolamin (17 mmol) und 80 ml 1,3,5-Triethyl-1,3,5-triazacyclohexan 1.4 g 1,3-Diethyl-5-(2-Hydroxyethyl)-1,3,5-triazacyclohexan gewonnen:
1H NMR (CDCl₃, 200 MHz): 5.74br (1H, HO), 3.62t (2H, CH₂OH), 3.29br (6H, NCH₂N), 2.85t (2H, NCH₂CH₂OH), 2.24t (4H, NCH₂CH₃), 0.99q (4H, NCH₂CH₃),

### 8.2. Herstellung von 1,3-Dimethyl-5-(2-oxidoethyl)-1,3,5-triazacyclohexanchromdichlorid

Zu 1.0 g 1,3-Dimethyl-5-(2-hydroxyethyl)-1,3,5-triazacyclohexan (7.7 mmol) und 2.8 g CrCl₃(THF)₃ (7.5 mmol) wurden 40 ml THF kondensiert. Die Suspension wurde bei Raumtemperatur gerührt bis sie sich grün färbte. Nach Entfernen des Lösungsmittels im Vakuum wurden erneut 40 ml THF zukondensiert und die grüne Suspension 1 Stunde gerührt. Nach erneutem Entfernen des THF, zweimal Waschen mit Ether und Trocknen im Vakuum wurden 1.4 g (91%) des hell-grünen Produktes 1,3-Dimethyl-5-(2-oxidoethyl)-1,3,5-triazacyclohexanchromdichlorid erhalten.
IR (KBr, ν/cm⁻¹): 3226m, 2941s, 2899m, 2856m, 2789s, 2729m, 2687m, 2650m, 2604w, 1468w, 1445w, 1429w, 1385m, 1335w, 1258m, 1234s, 1203w, 1147s, 1108s, 1055m, 1034m, 1003s, 983w, 961w, 944w, 917s, 899m, 862w, 837w, 795w, 655w, 616w

### Beispiel 9 bis 21:

### Polymerisationen

Zu einer Lösung des in Tabelle 1 angegebenen Komplexes in 250 ml Toluol wurde die entsprechende MAO-Menge (10%ige Lösung in Toluol) zugegeben. Bei der Aktivierung mit DMAB N,N-Dimethylaniliniumtetrakis(pentafluorophenyl)borat wurde die in Tabelle 1 angegebene Menge DMAB zugegeben, auf 70°C erhitzt, dieses Gemisch dann mit TiBAl (siehe Tab. 1) versetzt und die so erhaltene Lösung wieder auf 40°C gebracht. Die Polymerisation wurde durch Zuleiten von Ethylen mit einer Flußgeschwindigkeit von ca. 20 bis 40 l/h bei Atmosphärendruck und 40°C gestartet. Nach der in Tabelle 1 angegebenen Zeit unter konstantem Ethylenfluß wurde die Polymerisation durch Zugabe von methanolischer HCl-Lösung (15 ml konzentrierte Salzsäure in 50 ml Methanol) abgebrochen. Anschließend wurden 250 ml Methanol zugegeben und das entstandene weiße Polymer abfiltriert, mit Methanol gewaschen und bei 70°C getrocknet.

Polymerisationsdaten und die entsprechenden Produkteigenschaften können aus der Tabelle 1 entnommen werden.

Der Comonergehalt des Polymeren (%C₆) und dessen Methylseitenkettengehalt pro 1000 C-Atome der Polymerkette (CH₃/1000) wurde durch IR Spectroskopie bestimmt.

Der η Wert wurde mit einem automatischen Ubbelohde Viskometer (Lauda PVS 1) mit Dekalin als Lösungsmittel bei 130 °C bestimmt (ISO1628 bei 130°C, 0,001 g/ml Decalin).

Die Bestimmung der Molmassenverteilungen und der daraus abgeleiteten Mittelwerte Mn, Mw und Mw/Mn erfolgte mittels Hochtemperatur-Gelpermeations-chromatographie in Anlehnung an DIN 55672 unter folgende Bedingungen: : Lösungsmittel: 1,2,4-Trichlorbenzol, Fluß: 1 ml/min, Temperatur: 140°C, Kalibrierung mit PE Standards.

Abkürzungen in Tabelle 1:

| | |
|---|---|
| Mw | Gewichtsmittel des Molekulargewichts |
| Mn | Zahlenmittel des Molekulargewichts |
| Q | Polydispersität (Verhältnis von Mw zu Mn) |
| m.p. | Schmelztemperatur des Polymers |
| η | Staudingerindex (Viskosität) |
| CH₃/1000 | Anzahl der Methylseitenketten pro 1000 C-Atomen |

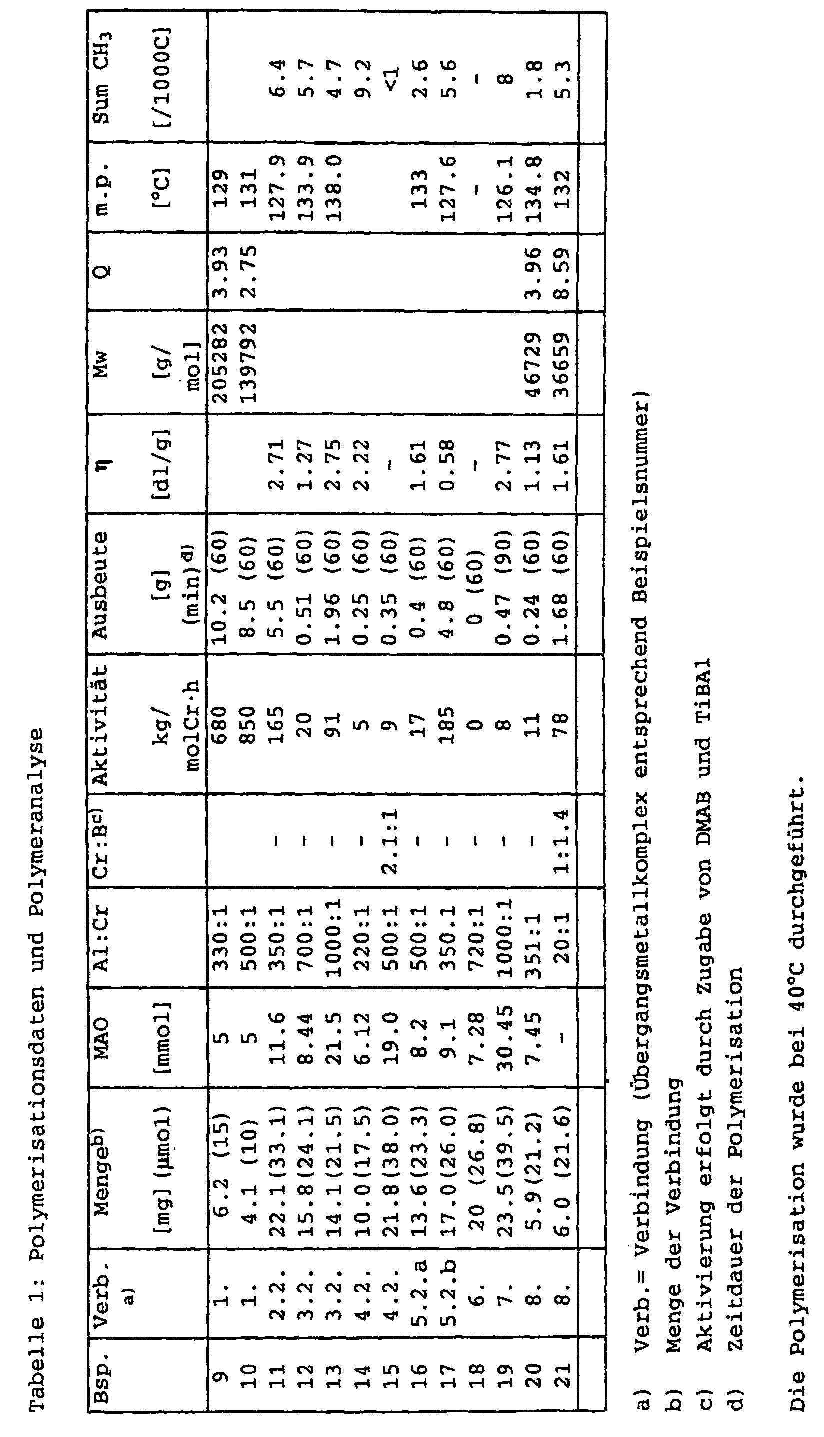

## Patentansprüche

1. Verfahren zur Polymerisation von Olefinen, **dadurch gekennzeichnet, daß** die Polymerisation in Anwesenheit von Katalysatoren durchgeführt wird, die folgende Komponenten beinhalten:
(A) mindestens einen Komplex eines Übergangsmetalls mit einem dreizähnigen macrocyclischen Liganden, welcher mindestens einen Substituenten trägt, der eine Donorfunktion aufweist der allgemeinen Formel I 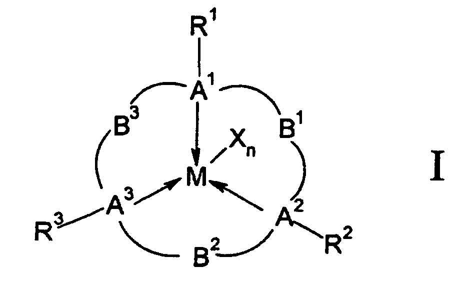 , worin die Variablen folgende Bedeutung haben:
M ein Übergangsmetall der Gruppen 3 bis 12 des Periodensystems,
B¹-B³ ein Diradikal, ausgewählt aus der folgenden Gruppe 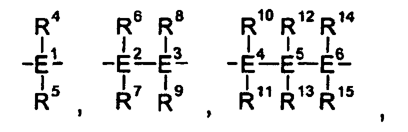 wobei
E¹-E⁶ Silizium oder Kohlenstoff bedeutet und maximal zwei der E⁴-E⁶ Silizium sind,
A¹-A³ Stickstoff,
R¹-R¹⁵ Wasserstoff, C₁-C₂₀-Alkyl, 5- bis 7-gliedriges Cycloalkyl, das seinerseits eine C₆-C₁₀ Arylgruppe als Substituent tragen kann, C₂-C₂₀-Alkenyl, C₆-C₂₀-Aryl, Alkylaryl mit 1 bis 10 C-Atomen im Alkylrest und 6-20 C-Atomen im Arylrest, SiR³²₃, oder ein Rest der allgemeinen Formel -Z-D, wobei die organischen Reste R¹-R¹⁵ durch Halogen(e) substituiert sein können und je zwei geminale oder vicinale Reste R¹-R¹⁵ auch zu einem fünf- oder sechsgliedrigen Ring verbunden sein können, und mindestens einer der Reste R¹-R¹⁵ ein Rest -Z-D ist, wobei D eine funktionelle Gruppe ist, die folgende Bedeutung hat:
D NR¹⁶R¹⁷, NR¹⁶, OR¹⁶, O, SR¹⁶, S, PR¹⁶R¹⁷, SO₃R¹⁶, OC(O)R¹⁶, CO₂, C(O)R¹⁶, C(NR¹⁶)R¹⁷, CN oder ein fünf- oder sechsgliedriges heterocyclisches Ringsystem, wobei die Reste R¹⁶-R¹⁷ auch mit Z zu einem fünf- oder sechsgliedrigen Ring verbunden sein können;
Z ein Diradikal, ausgewählt aus der folgenden Gruppe: 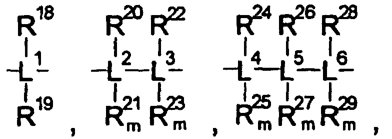 wobei
L¹-L⁶ Silizium oder Kohlenstoff bedeutet, maximal zwei der L⁴-L⁶ Silizium sind und m=0 ist, falls jeweils zwei der vicinalen Reste R²⁰, R²², R²⁴, R²⁶ und R²⁸ einen aromatischen Ring bilden oder zwischen zwei benachbarten L²-L⁶ eine Doppelbindung ausgebildet ist, und andernfalls m=1 ist,
X unabhängig voneinander Fluor, Chlor, Brom, Jod, Wasserstoff, C₁-C₁₀-Alkyl, C₂-C₁₀-Alkenyl, C₆-C₂₀-Aryl, Alkylaryl mit 1-10 C-Atomen im Alkylrest und 6-20 C-Atomen im Arylrest, NR³⁰R³¹, OR³⁰, SR³⁰, SO₃R³⁰, OC(O)R³⁰, CN, SCN, =O, β-Diketonat, BF₄-, PF₆-, oder sperrige nichtkoordinierende Anionen,
R¹⁶-R³¹ Wasserstoff, C₁-C₂₀-Alkyl, 5- bis 7-gliedriges Cycloalkyl, das seinerseits eine C₆-C₁₀ Arylgruppe als Substituent tragen kann, C₂-C₂₀-Alkenyl, C₆-C₂₀-Aryl, Alkylaryl mit 1 bis 10 C-Atomen im Alkylrest und 6-20 C-Atomen im Arylrest, SiR³²₃, wobei die organischen Reste R¹⁶-R³¹ durch Halogen(e) substituiert sein können und je zwei geminale oder vicinale Reste R¹⁶-R³¹ auch zu einem fünf- oder sechsgliedrigen Ring verbunden sein können,
R³² unabhängig voneinander Wasserstoff, C₁-C₂₀-Alkyl, 5- bis 7-gliedriges Cycloalkyl, das seinerseits eine C₆-C₁₀ Arylgruppe als Substituent tragen kann, C₂-C₂₀-Alkenyl, C₆-C₂₀-Aryl, Alkylaryl mit 1 bis 10 C-Atomen im Alkylrest und 6-20 C-Atomen im Arylrest und je zwei geminale Reste R³² auch zu einem fünf- oder sechsgliedrigen Ring verbunden sein können,
n eine Zahl von 1 bis 4, welche der Oxidationsstufe von M, oder, falls D an das Metallzentrum M kovalent gebunden ist, der Oxidationsstufe von M minus der Anzahl an kovalent an M gebundenen Gruppen D entspricht, und außerdem pro X=Sauerstoff der Wert von n um jeweils 1 reduziert wird,
(B)optional eine oder mehrere Aktivatorverbindungen.

2. Verfahren nach Anspruch 1, **dadurch gekennzeichnet, daß** nur R¹ einen Rest -Z-D bedeutet.

3. Verfahren nach den Ansprüchen 1 bis 2, **dadurch gekennzeichnet, daß** B¹, B² und B³ identisch sind.

4. Verfahren nach den Ansprüchen 1 bis 3, **dadurch gekennzeichnet, daß** D gleich Sauerstoff, NR¹⁶, NR¹⁶R¹⁷ oder CN ist.

5. Verfahren nach den Ansprüchen 1 bis 4, worin das Übergangsmetall M aus den Gruppen 3 bis 8 des Periodensystems stammt.

6. Verfahren nach den Ansprüchen 1 bis 5, worin das Übergangsmetall M aus der Gruppe 6 des Periodensystems stammt.

7. Verfahren nach den Ansprüchen 1 bis 6, **dadurch gekennzeichnet, daß** man als Aktivatorverbindung (B) eine Verbindung ausgewählt aus der Gruppe Aluminoxan, Dimethylaniliniumtetrakispentafluorophenylborat, Trityltetrakispentafluorophenylborat oder Trispentafluorophenylboran verwendet.

8. Verfahren nach den Ansprüchen 1 bis 7, **dadurch gekennzeichnet, daß** mindestens ein Olefin ausgewählt aus der Gruppe Ethen, Propen, 1-Buten, 1-Penten, 1-Hexen, 1-Hepten oder 1-Okten polymerisiert wird.

9. Verfahren nach den Ansprüchen 1 bis 8, **dadurch gekennzeichnet, daß** die Polymerisation in Suspension oder Gasphase erfolgt.

10. Verfahren nach den Ansprüchen 1 bis 9, **dadurch gekennzeichnet, daß** mindestens ein Metallkomplex (A) in Gegenwart von mindestens einem für die Polymerisation von Olefinen üblichen Katalysator (C) und gewünschtenfalls ein oder mehrerer Aktivatorverbindungen (B) verwendet wird.

11. Katalysatorsystem, welches folgende Komponenten beinhaltet:
a) mindestens einen Übergangsmetallkomplex (A) gemäß den Ansprüchen 1 bis 6 und
b) mindestens eine Aktivatorverbindung (B)

## Claims

1. A process for the polymerization of olefins, which comprises carrying out the polymerization in the presence of catalysts comprising the following components:
(A) at least one transition metal complex which comprises a tridentate macrocyclic ligand bearing at least one substituent having a donor function and has the formula I 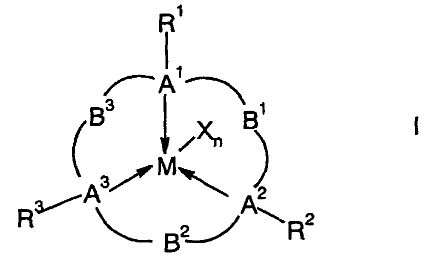 where the variables have the following meanings:
M is a transition metal of groups 3 to 12 of the Periodic Table,
B¹-B³ are each a divalent radical selected from the group consisting of 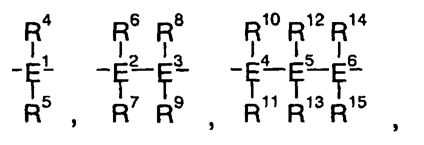 where
E¹-E⁶ are silicon or carbon and not more than two of E⁴-E⁶ are silicon,
A¹-A³ are nitrogen,
R¹-R¹⁵ are hydrogen, C₁-C₂₀-alkyl, 5- to 7-membered cycloalkyl which may in turn bear a C₆-C₁₀-aryl group as substituent, C₂-C₂₀-alkenyl, C₆-C₂₀-aryl, alkylaryl having from 1 to 10 carbon atoms in the alkyl part and 6-20 carbon atoms in the aryl part, SiR³²₃ or a radical of the formula -Z-D, where the organic radicals R¹-R¹⁵ may be substituted by halogen(s) and any two geminal or vicinal radicals R¹-R¹⁵ may also be joined to form a five- or six-membered ring, and at least one of the radicals R¹-R¹⁵ is a radical -Z-D, where D is a functional group having the following meanings:
D is NR¹⁶R¹⁷, NR¹⁶, OR¹⁶, O, SR¹⁶, S, PR¹⁶R¹⁷, SO₃R¹⁶, OC(O)R¹⁶, CO₂, C(O)R¹⁶, C(NR¹⁶)R¹⁷, CN or a five- or six-membered heterocyclic ring system, where the radicals R¹⁶-R¹⁷ may also be joined to Z to form a five- or six-membered ring;
Z is a divalent radical selected from the group consisting of: 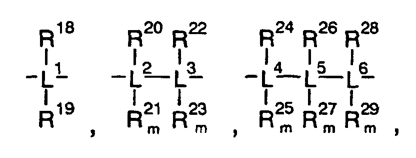 where
L¹-L⁶ are silicon or carbon, not more than two of L⁴-L⁶ are silicon and m=0 if any two of the vicinal radicals R²⁰, R²², R²⁴, R²⁶ and R²⁸ form an aromatic ring or a double bond is formed between two adjacent L²-L⁶, and otherwise m=1,
X are, independently of one another, fluorine, chlorine, bromine, iodine, hydrogen, C₁-C₁₀-alkyl, C₂-C₁₀-alkenyl, C₆-C₂₀-aryl, alkylaryl having 1-10 carbon atoms in the alkyl part and 6-20 carbon atoms in the aryl part, NR³⁰R³¹, OR³⁰, SR³⁰, SO₃R³⁰, OC(O)R³⁰, CN, SCN, =O, β-diketonate, BF₄-, PF₆- or bulky noncoordinating anions,
R¹⁶-R³¹ are hydrogen, C₁-C₂₀-alkyl, 5- to 7-membered cycloalkyl which may in turn bear a C₆-C₁₀-aryl group as substituent, C₂-C₂₀-alkenyl, C₆-C₂₀-aryl, alkylaryl having from 1 to 10 carbon atoms in the alkyl part and 6-20 carbon atoms in the aryl part, SiR³²₃, where the organic radicals R¹⁶-R³¹ may be substituted by halogen(s) and any two geminal or vicinal radicals R¹⁶-R³¹ may also be joined to form a five- or six-membered ring,
R³² are, independently of one another, hydrogen, C₁-C₂₀-alkyl, 5- to 7-membered cycloalkyl which may in turn bear a C₆-C₁₀-aryl group as substituent, C₂-C₂₀-alkenyl, C₆-C₂₀-aryl, alkylaryl having from 1 to 10 carbon atoms in the alkyl part and 6-20 carbon atoms in the aryl part and any two geminal radicals R³² may also be joined to form a five- or six-membered ring,
n is a number from 1 to 4 which corresponds to the oxidation state of M or, if D is covalently bound to the metal center M, the oxidation state of M minus the number of groups D covalently bound to M, and, furthermore, the value of n is reduced by 1 for each X=oxygen,
(B) if desired, one or more activator compounds.

2. A process as claimed in claim 1, wherein only R¹ is a radical -Z-D.

3. A process as claimed in claim 1 or 2, wherein B¹, B² and B³ are identical.

4. A process as claimed in any of claims 1 to 3, wherein D is oxygen, NR¹⁶, NR¹⁶R¹⁷ or CN.

5. A process as claimed in any of claims 1 to 4, wherein the transition metal M comes from groups 3 to 8 of the Periodic Table.

6. A process as claimed in any of claims 1 to 5, wherein the transition metal M comes from group 6 of the Periodic Table.

7. A process as claimed in any of claims 1 to 6, wherein a compound selected from the group consisting of aluminoxane, dimethylanilinium tetrakispentafluorophenylborate, trityl tetrakispentafluorophenylborate and trispentafluorophenylborane is used as activator compound (B).

8. A process as claimed in any of claims 1 to 7, wherein at least one olefin selected from the group consisting of ethene, propene, 1-butene, 1-pentene, 1-hexene, 1-heptene or 1-octene is polymerized.

9. A process as claimed in any of claims 1 to 8, wherein the polymerization is carried out in suspension or in the gas phase.

10. A process as claimed in any of claims 1 to 9, wherein at least one metal complex (A) in the presence of at least one catalyst (C) customary for the polymerization of olefins and, if desired, one or more activator compounds (B) is used.

11. A catalyst system comprising the following components:
a) at least one transition metal complex (A) as defined in any of claims 1 to 6 and
b) at least one activator compound (B).

## Revendications

1. Procédé de polymérisation d'oléfines, **caractérisé en ce que** la polymérisation est réalisée en présence de catalyseurs qui contiennent les composants suivants :
(A) au moins un complexe d'un métal transitoire avec un ligand macrocyclique à trois dents, qui porte au moins un substituant qui présente une fonction de donneur, répondant à la formule générale I 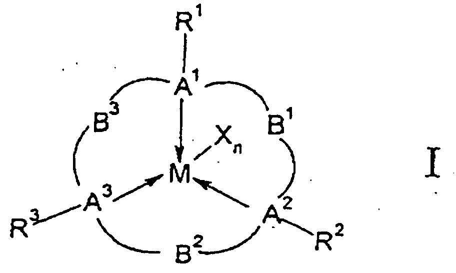 dans laquelle les variables ont la signification suivante :
M représente un métal transitoire des groupes 3 à 12 de la classification périodique des éléments,
B¹-B³ représente un diradical, choisi dans le groupe suivant 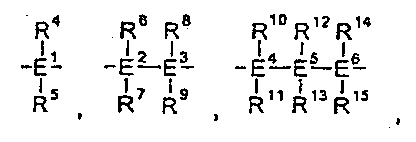 où
E¹-E⁶ représentent du silicium ou du carbone et au maximum deux des E⁴-E⁶ sont du silicium,
A¹-A³ représentent l'azote,
R¹-R¹⁵ représentent l'hydrogène, un alkyle en C₁-C₂₀, un cycloalkyle ayant 5 à 7 chaînons, qui peut pour sa part porter un groupe aryle en C₆-C₁₀ comme substituant, un alcényle en C₂-C₂₀, un aryle en C₆-C₂₀, un alkylaryle ayant de 1 à 10 atomes de carbone dans le radical alkyle et 6 à 20 atomes de carbone dans le radical aryle, SiR³²₃, ou un radical répondant à la formule générale -Z-D, et les radicaux organiques R¹-R¹⁵ peuvent être substitués par un (des) halogène(s) et respectivement deux radicaux R¹-R¹⁵ géminaux ou vicinaux peuvent également être liés à un cycle à cinq ou six chaînons, et au moins l'un des radicaux R¹-R¹⁵ est un radical -Z-D, où D est un groupe fonctionnel qui a la signification suivante :
D représente NR¹⁶R¹⁷, NR¹⁶, OR¹⁶, O, SR¹⁶, S, PR¹⁶R¹⁷, SO₃R¹⁶, OC(O)R¹⁶, CO₂, C(O)R¹⁶, C(NR¹⁶)R¹⁷, CN ou une combinaison cyclique hétérocyclique à cinq ou six chaînons, et les radicaux R¹⁶-R¹⁷ peuvent aussi être liés à un cycle à cinq ou six chaînons ;
Z représente un diradical choisi dans le groupe suivant : 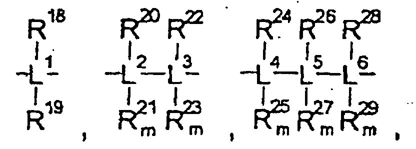 où :
L¹-L⁶ représentent le silicium ou le carbone, au maximum deux des L⁴-L⁶ sont le silicium et m=0, si respectivement deux des radicaux vicinaux R²⁰, R²², R²⁴, R²⁶ et R²⁸ forment un cycle aromatique ou une double liaison est formée entre deux L²-L⁶ adjacents, et sinon m=1,
X représente, indépendamment les uns des autres, le fluor, le chlore, le brome, l'iode, l'hydrogène, un alkyle en C₁-C₁₀, un alcényle en C₂-C₁₀, un aryle en C₆-C₂₀, un alkylaryle ayant de 1 à 10 atomes de carbone dans le radical alkyle et 6 à 20 atomes de carbone dans le radical aryle, NR³⁰R³¹, OR³⁰, SR³⁰, SO₃R³⁰, OC(O)R³⁰, CN, SCN, =0, un β-dicétonate, BF₄-, PF₆-, ou des anions volumineux non coordonnés,
R¹⁶-R³¹ représentent l'hydrogène, un alkyle en C₁-C₂₀, un cycloalkyle ayant 5 à 7 chaînons, qui peut pour sa part porter un groupe aryle en C₆-C₁₀ comme substituant, un alcényle en C₂-C₂₀, un aryle en C₆-C₂₀, un alkylaryle ayant de 1 à 10 atomes de carbone dans le radical alkyle et 6 à 20 atomes de carbone dans le radical aryle, SiR³²₃, et les radicaux organiques R¹⁶-R³¹ peuvent être substitués par un (des) halogène(s) et respectivement deux radicaux R¹⁶-R³¹ géminaux ou vicinaux peuvent être liés aussi à un cycle à cinq ou six chaînons,
R³² représente, indépendamment les uns des autres, l'hydrogène, un alkyle en C₁-C₂₀, , un cycloalkyle ayant 5 à 7 chaînons, qui peut pour sa part porter un groupe aryle en C₆-C₁₀ comme substituant, un alcényle en C₂-C₂₀, un aryle en C₆-C₂₀, un alkylaryle ayant de 1 à 10 atomes de carbone dans le radical alkyle et 6 à 20 atomes de carbone dans le radical aryle, et respectivement deux radicaux R³² géminaux peuvent être liés aussi à un cycle à cinq ou six chaînons,
N représente un nombre de 1 à 4, qui est égal au degré d'oxydation de M ou, si D est à liaison covalente avec le centre métallique M, au degré d'oxydation de M moins le nombre de groupes D liés de façon covalente à M, et en outre, par x=oxygène, la valeur de N est réduite respectivement de 1,
(B) facultativement, une ou plusieurs combinaisons d'activateur.

2. Procédé selon la revendication 1, **caractérisé en ce que** seul R¹ signifie un radical -Z-D.

3. Procédé selon les revendications 1 à 2, **caractérisé en ce que** B¹, B² et B³ sont identiques.

4. Procédé selon les revendications 1 à 3, **caractérisé en ce que** D correspond à l'oxygène, à NR¹⁶, NR¹⁶R¹⁷ ou CN.

5. Procédé selon les revendications 1 à 4, dans lequel le métal transitoire M provient des groupes 3 à 8 de la classification périodique des éléments.

6. Procédé selon les revendications 1 à 5, dans lequel le métal transitoire M provient du groupe 6 de la classification périodique des éléments.

7. Procédé selon les revendications 1 à 6, **caractérisé en ce que** l'on utilise comme combinaison d'activateurs (B) une combinaison choisie dans le groupe constitué par l'aluminoxane, le borate de diméthylaniliniumtétrakispentafluorophényle, le borate de trityltétrakispentafluorophényle ou le borate de trispentafluorophényle.

8. Procédé selon les revendications 1 à 7, **caractérisé en ce qu'**au moins une oléfine choisie dans le groupe constitué par l'éthène, le propène, le 1-butène, le 1-pentène, le 1-héxène, le heptène ou le 1-octène, est polymérisée.

9. Procédé selon les revendications 1 à 8, **caractérisé en ce que** la polymérisation est effectuée en suspension ou en phase gazeuse.

10. Procédé selon les revendications 1 à 9, **caractérisé en ce qu'**on utilise au moins un complexe métallique (A) en présence d'au moins un catalyseur (C) habituel pour la polymérisation d'oléfines et, si on le souhaite, une ou plusieurs combinaisons d'activateurs (B).

11. Système de catalyseur qui contient les composants suivants :
a) au moins un complexe de métal transitoire (A) selon les revendications 1 à 6, et
b) au moins une combinaison d'activateurs (B)
